# EUROPEAN PATENT APPLICATION

(11) **EP 4 663 060 A1**
(43) Date of publication of application: **17.12.2025**
(21) Application number: 25181262.4
(22) Date of filing: 06.06.2025
(51) Int. Cl.: A43B 13/14, B29C 64/386, B33Y 50/00, B33Y 80/00, G06Q 30/0601

(54) **DIGITAL ASSET CREATION BASED ON FOOTWEAR ARTICLES**

(30) Priority: 14.06.2024 US 202418743990
(71) Applicant: adidas AG, 91074 Herzogenaurach (DE)
(72) Inventor: STEELE, Cori Marble, Portland, OR 97217 (US); DELGADO, Christian Manuel Arias, Portland, OR 97217 (US); LI, Yuanjie, Portland, OR 97217 (US); DANH, Mimi, Portland, OR 97217 (US)
(74) Representative: Bardehle Pagenberg Partnerschaft mbB Patentanwälte Rechtsanwälte

(57) **Abstract**

A system and method for creating and managing digital assets, such as non-fungible tokens (NFTs), associated with customized articles of footwear. The system comprises a graphical user interface (GUI) allowing users to select and customize apparel components, such as the upper, midsole, and/or sole of an article of footwear. Options for the sole include lattice-based structures. The chosen components and customizations, including the selected lattice structure, may then be used to generate a unique digital asset linked to the user's account and may be stored on a distributed ledger platform. The digital asset may be configured to grant conditional rights to request production of the customized footwear. Conditions associated with the components and the lattice-based footwear, including limitations on physical creation, delivery, and customization, may be provided by a smart contract that governs the processing of the digital assets and associated rights.

## Description

### FIELD

Embodiments described herein generally relate to footwear and footwear components having a configurable and selectable mesh or lattice component. Specifically, embodiments described herein relate to virtual configuration of footwear and footwear components based on an additively manufactured mesh component such as a lattice structure, the creation of digital assets, such as non-fungible tokens (NFTs), based on the virtually configured footwear and/or footwear components, and the manufacturing of physical footwear and footwear components based on lattice-based digital assets.

### BACKGROUND

All footwear generally includes a sole that provides support and cushioning to a wearer's foot and an upper attached to the sole that encloses the wearer's foot. The sole may be constructed to provide the desired comfort and performance characteristics for the wearer. Manufacturing a sole by molding may be inexpensive, but current methods provide limited ability for users to engage with their footwear (beyond wearing them). For example, current methods provided limited options for users to customize the physical characteristics of the footwear including the sole and the upper and to generate virtual versions of footwear. That is, customers may desire footwear having uniquely customized characteristics to optimize performance and/or aesthetics of the footwear for the customer. Thus, methods of forming a sole and manufacturing a shoe that allow for greater customization of the resulting properties and performance characteristics of the sole is desired.

In addition, the digitization of physical products, has been in full swing in recent years. Digital assets may be made available from companies through their various networking platforms and provide a mechanism for these companies to expand the utility of physical products into the digital realm for the purpose of increasing overall engagement with the products offered through a company's various platforms. For example, a digital asset associated with a physical product may be provided within a marketplace system that enables customers to participate in transactions involving the digital asset with other customers. The digital asset could authorize creation of a corresponding physical product.

Technologies such as distributed ledgers (e.g., Blockchain) have further transformed the digital asset landscape by enabling users to participate in the creation of digital assets and allowing manufacturers to impose constraints on use of digital assets even if ownership passes to different customers. However, current digital assets have little practical value to customers outside of the particular associated service or product and beyond the asset itself. For example, current digital assets have little connection with real world objects and are static creations that are limited to what is provided by the company. A system and interface that can allow a customer to customize footwear components, such as the sole, in a digital asset and corresponding manufacturing of a physical product based on the digital asset is desired.

### BRIEF SUMMARY OF THE INVENTION

Embodiments according to the present disclosure are directed to methods and system for generating one or more digital assets representative of a lattice-based footwear article. Steps of the methods and performed by the system may include receiving a selection of a sole component for the lattice-based footwear article using a graphical user interface. The selection can include a selected lattice structure and the graphical user interface can be configured to display multiple lattice structures including the selected lattice structure. Based on the selected lattice structure, another step can include generating a digital version of the lattice-based footwear article, which can include a digitally rendered sole. The digitally rendered sole can depict an additively manufactured mesh component generated based on the selected lattice structure. Additional steps can include generating a digital asset that includes a digital version of the lattice-based footwear article. The digital version of the lattice-based article can be configured to be manipulable via a user input received via the graphical user interface.

A first embodiment (1) of the present application is directed to a system for generating one or more digital assets representative of a lattice-based footwear article, the system configured to receive, via a graphical user interface, a selection of a sole component for the lattice-based footwear article, wherein the selection comprises a selected lattice structure, and wherein the graphical user interface is configured to display a plurality of lattice structures including the selected lattice structure; generate, based on the selected lattice structure, a digital version of the lattice-based footwear article including a digitally rendered sole, wherein the digitally rendered sole depicts an additively manufactured mesh component generated based on the selected lattice structure; and generate a digital asset comprising the digital version of the lattice-based footwear article, wherein the digital version of the lattice-based article is configured to be manipulable via a user input received via the graphical user interface.

In a second embodiment (2), the system according to the first embodiment (1) is further configured to receive, via the graphical user interface, an additional selection of an upper structure for the lattice-based footwear article; update the digital version of the lattice-based footwear article to include the digitally rendered sole coupled to a digitally rendered upper, wherein the digitally rendered upper depicts the upper structure; and generate a second digital asset comprising a second digital version of the lattice-based footwear article.

In a third embodiment (3), the system according to the first embodiment (1) or the second embodiment (2) is further configured to store the digital asset in a digital location associated with a user.

In a fourth embodiment (4), the system according to any of embodiments (1) - (3) is further configured to generate a second digital asset representative of the selected lattice structure; and store the second digital asset in the digital location associated with the user.

In a fifth embodiment (5), the system according to any of embodiments (1) - (4) is further configured to receive, via the graphical user interface, a request to customize the selected lattice structure based on one or more user-selectable parameters; and update the selected lattice structure based on the one or more user-selected parameters to create a customized lattice structure, wherein the digitally rendered sole is based on the customized lattice structure.

In a sixth embodiment (6), the one or more user-selectable parameters according to the fifth embodiment (5) comprises at least one of a shape of the selected lattice structure, a color of the selected lattice structure, and user information.

In a seventh embodiment (7), the system according to any of embodiments (1) - (6), is further configured to store the digital asset in a digital storage location associated with a user; and provide, via the graphical user interface, access to any digital assets, including the digital asset, owned by the user.

In an eighth embodiment (8), the system according to any of embodiments (1) - (7), comprises a graphical user interface, and the system is further configured to receive, via the graphical user interface, a request to manufacture the lattice-based footwear article; determine, based on one or more restriction conditions associated with the digital asset, whether the request is authorized; and transmit, responsive to determining that the request is authorized, an authorization to a manufacturing system, wherein the authorization includes the digital asset.

A ninth embodiment (9) of the present disclosure is directed to a method of receiving, via a graphical user interface, a selection of a sole component for the lattice-based footwear article, wherein the selection comprises a selected lattice structure, and wherein the graphical user interface is configured to display a plurality of lattice structures including the selected lattice structure; generating, based on the selected lattice structure, a digital version of the lattice-based footwear article including a digitally rendered sole, wherein the digitally rendered sole depicts an additively manufactured mesh component generated based on the selected lattice structure; and generating a digital asset comprising the digital version of the lattice-based footwear article, wherein the digital version of the lattice-based article is configured to be manipulable via a user input received via the graphical user interface.

In a tenth embodiment (10), the method according to the ninth embodiment (9) further comprises receiving, via the graphical user interface, an additional selection of an upper structure for the lattice-based footwear article; updating the digital version of the lattice-based footwear article to include the digitally rendered sole coupled to a digitally rendered upper, wherein the digitally rendered upper depicts the upper structure; and generating a second digital asset comprising a second digital version of the lattice-based footwear article.

In an eleventh embodiment (11), the method according to any one of embodiments (9) - (10) further comprises storing the digital asset in a digital location associated with a user.

In a twelfth embodiment (12), the method according to any of embodiments (9) - (11) further comprises storing the second digital asset in the digital location associated with the user.

In a thirteenth embodiment (13), the method according to any of embodiments (9) - (12) further comprises receiving, via the graphical user interface, a request to customize the selected lattice structure based on one or more user-selectable parameters; and updating the selected lattice structure based on the one or more user-selected parameters to create a customized lattice structure, wherein the digitally rendered sole is based on the customized lattice structure.

In a fourteenth embodiment (14), the one or more user-selectable parameters according to the thirteenth embodiment (13) comprises at least one of a shape of the selected lattice structure, a color of the selected lattice structure, and user information.

In a fifteenth embodiment (15), the method according to any of embodiments (9) - (14) further comprises storing the digital asset in a digital storage location associated with a user; and providing, via the graphical user interface, access to any digital assets, including the digital asset, owned by the user.

In a sixteenth embodiment (16), the method according to any of embodiments (9) - (15) further comprises receiving, via the graphical user interface, a request to manufacture the lattice-based footwear article; determining, based on one or more restriction conditions associated with the digital asset, whether the request is authorized; and transmitting, responsive to determining that the request is authorized, an authorization to a manufacturing system, wherein the authorization includes the digital asset.

A seventeenth embodiment (17) of the present disclosure is directed to a non-transitory computer-readable medium with program code stored thereon, wherein the program code is executable to cause a system to perform operations for generating one or more digital assets representative of a lattice-based footwear article, the operations comprising receiving, via a graphical user interface, a selection of a sole component for the lattice-based footwear article, wherein the selection comprises a selected lattice structure, and wherein the graphical user interface is configured to display a plurality of lattice structures including the selected lattice structure; generating, based on the selected lattice structure, a digital version of the lattice-based footwear article including a digitally rendered sole, wherein the digitally rendered sole depicts an additively manufactured mesh component generated based on the selected lattice structure; and generating a digital asset comprising the digital version of the lattice-based footwear article, wherein the digital version of the lattice-based article is configured to be manipulable via a user input received via the graphical user interface.

In an eighteenth embodiment (18), the operations of the non-transitory computer-readable medium according to the seventeenth embodiment (17) comprise receiving, via the graphical user interface, an additional selection of an upper structure for the lattice-based footwear article; updating the digital version of the lattice-based footwear article to include the digitally rendered sole coupled to a digitally rendered upper, wherein the digitally rendered upper depicts the upper structure; and generating a second digital asset comprising a second digital version of the lattice-based footwear article.

In an nineteenth embodiment (19), the operations of the non-transitory computer-readable medium according to any of embodiments (17) or (18) comprise storing the digital asset in a digital location associated with a user.

In an twentieth embodiment (20), the operations of the non-transitory computer-readable medium according to any of embodiments (17) - (19) further comprise storing the second digital asset in the digital location associated with the user.

In an twenty-first embodiment (21), the the operations of the non-transitory computer-readable medium according to any of embodiments (17) - (20) further comprise receiving, via the graphical user interface, a request to customize the selected lattice structure based on one or more user-selectable parameters; and updating the selected lattice structure based on the one or more user-selected parameters to create a customized lattice structure, wherein the digitally rendered sole is based on the customized lattice structure.

In a twenty-second embodiment (22), the one or more user-selectable parameters according to the twenty-first embodiment (21) comprises at least one of a shape of the selected lattice structure, a color of the selected lattice structure, and user information.

In a twenty-third embodiment (23), the operations of the non-transitory computer-readable medium according to any of embodiments (17) - (22) further comprise storing the digital asset in a digital storage location associated with a user; and providing, via the graphical user interface, access to any digital assets, including the digital asset, owned by the user.

In a twenty-fourth embodiment (24), the operations of the non-transitory computer-readable medium according to any of embodiments (17) - (23) further comprise receiving, via the graphical user interface, a request to manufacture the lattice-based footwear article; determining, based on one or more restriction conditions associated with the digital asset, whether the request is authorized; and transmitting, responsive to determining that the request is authorized, an authorization to a manufacturing system, wherein the authorization includes the digital asset.

### BRIEF DESCRIPTION OF THE DRAWINGS/FIGURES

The accompanying drawings, which are incorporated herein and form a part of the specification, illustrate the present disclosure and, together with the description, further serve to explain the principles thereof and to enable a person skilled in the pertinent art to make and use the same.
FIG. 1 shows a side view of footwear having a sole with a lattice component according to some embodiments.
FIG. 2 shows a block diagram of a system architecture including various components for processing digital and physical products according to some embodiments.
FIGS. 3A-3L show graphical user interfaces for processing and displaying digital and physical products according to some embodiments.
FIG. 4A shows a perspective view of a unit cell according to some embodiments.
FIG. 4B shows a perspective view of a partially customized cell according to some embodiments.
FIG. 4C shows a perspective view of a partially customized cell according to some embodiments.
FIG. 5 shows a perspective view of a midsole that includes a customized lattice according to some embodiments.
FIG. 6 is a flowchart illustrating a process for creating and customizing digital assets, according to some embodiments.
FIG. 7 is an example computer system useful for implementing various embodiments.

### DETAILED DESCRIPTION OF THE INVENTION

Reference will now be made in detail to representative embodiments illustrated in the accompanying drawing. It should be understood that the following descriptions are not intended to limit the embodiments to one preferred embodiment. To the contrary, it is intended to cover alternatives, modifications, and equivalents as can be included within the spirit and scope of the described embodiments as defined by the claims.

References in the specification to "some embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The indefinite articles "a," "an," and "the" include plural referents unless clearly contradicted or the context clearly dictates otherwise.

The terms "comprising" "comprise(s)," "including," and "include(s)" are open-ended transitional phrases. A list of elements following the transitional phrase "comprising," "comprise(s)," "including," or "include(s)" is a non-exclusive list, such that elements in addition to those specifically recited in the list can also be present.

As used herein, unless specified otherwise, references to "first," "second," "third," "fourth," etc. are not intended to denote order, or that an earlier-numbered feature is required for a later-numbered feature. Also, unless specified otherwise, the use of "first," "second," "third," "fourth," etc. does not necessarily mean that the "first," "second," "third," "fourth," etc. features have different properties or values.

Developments in materials and manufacturing have increased the number of options for constructing articles of footwear. For example, soles may be created based on different lattice structures via additive manufacturing techniques. Customization of physical apparel, particularly footwear, has gained significant popularity. Existing systems lack a seamless integration of digital customization and blockchain technology to create and manage digital assets (e.g., non-fungible tokens (NFTs)) associated with the customized footwear. This disclosure presents a system and method that facilitates the creation of customization of digital assets and integration of the digital asset system in manufacturing system for printing physical counterparts of the digital assets through a graphical interface. For example, the system and method may provide increased features for owning footwear and/or its components including the management of digital assets associated with the footwear and/or its components and the customization of footwear and/or its components including the selection of lattice structures for the sole and selection of different styles for the upper.

Some embodiments described herein relate to footwear having a sole that includes a mesh component to provide the sole with desired properties. The described system and method offer novel approaches for enabling footwear customization and expanding options associated with ownership of footwear by providing interfaces for users to customize footwear and its components for generating digital assets (e.g., non-fungible tokens or NFTs) and, in some embodiments, the corresponding unique physical items.

Some embodiments described herein relate to an article of footwear or a footwear component that includes a sole having one or more one mesh components. In some embodiments, the footwear may be customized to provide the sole with mechanical properties that vary across or within different regions and/or that vary depending on the direction in which the sole is loaded (for example, anisotropic properties) to provide performance improvements. Some embodiments described herein relate to an article of footwear or a footwear component having a mesh component that is additively manufactured. As a result, footwear having custom properties may be produced by controlling the mesh component geometry and dimensions.

As used herein, the term mesh component refers to a three-dimensional structure comprising a plurality of unit cells arranged in a a lattice-based structure. The lattice-based structure of a mesh component comprises interconnected structural members defining the plurality of unit cells. The structural members, and thus the unit cells, may be connected at nodes. In such embodiments, the interconnected structural members may be struts that are connected at nodes and that define unit cells arranged in a lattice configuration. In some embodiments, the plurality of interconnected unit cells may be arranged in a regular or repeating lattice configuration. Exemplary lattice configurations include, but are not limited to basic cubic lattices, body-centered cubic lattices, face-centered cubic lattices, and modified lattices based on these lattice types. Exemplary lattice configurations include, but are not limited to the lattice structures described in U.S. App. Nos. 17/069,623 and 18/313,135, which are hereby incorporated by reference in their entireties.

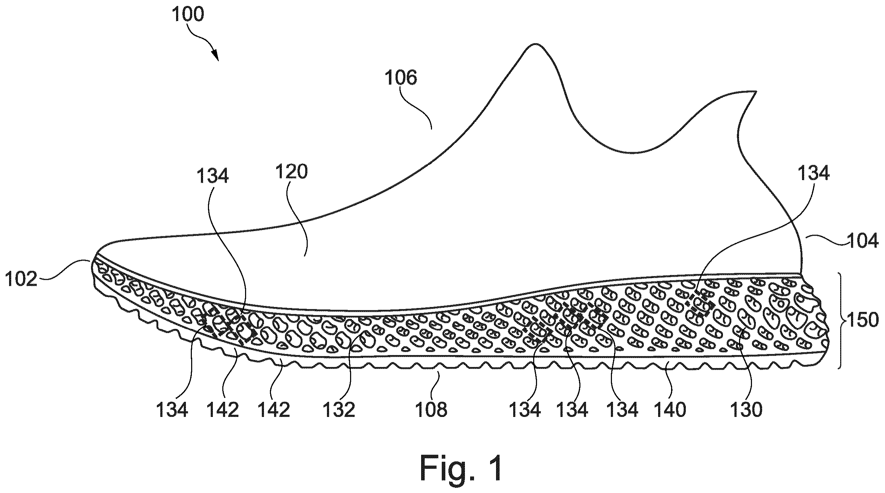

Unit cells may have any of various dimensions and geometries. Further, unit cells within a mesh component may be the same or may differ. Thus, a mesh component may include unit cells of different dimensions or geometries. The three-dimensional shape of a unit cell may be defined by a plurality of interconnected struts connected to one another at nodes, as shown for example in FIG. 1. In such embodiments, each unit cell may have a base geometry defined by the struts. As used herein, "base geometry" means the base three-dimensional shape, connection, and arrangement of the struts defining a unit cell. The base geometry of a unit cell may be, but is not limited to, a dodecahedron (e.g., rhombic), a tetrahedron, an icosahedron, a cube, a cuboid, a prism, or a parallelepiped. Each node may connect two or more struts. Struts may be arranged to provide a mesh component with the desired performance characteristics, and a mesh component may include regions with different densities of struts.

In some embodiments, the interconnected unit cells may comprise a solid representation of a repeating implicit surface of a lattice structure. In such embodiments, the unit cells may comprise a "base surface geometry" defined by the base three-dimensional shape of a body formed by one or more ribbons (walls) of material that define a solid representation of an implicit surface for a full unit cell. In some embodiments, the implicit surface may be a periodic implicit surface such that the base surface geometry of each unit cell contacts the base surface geometry of at least some adjacent unit cells to create a lattice. One example of a suitable periodic surface is a gyroid, but any type of suitable periodic surface may be used.

Herein, a solid representation of an implicit surface refers to a solid object following the shape of an implicit surface. Whereas an actual implicit surface has no thickness, a solid representation of an implicit surface has a thickness on one or both sides of the actual implicit surface in a three dimensional space. The thickness gives the solid representation volume, meaning the solid representation may be built as a physical object from physical material. The added thickness or thicknesses may be uniform, or at least approximately uniform notwithstanding fillets or local deformities, and thin in comparison to the overall size of the represented implicit surface. In some embodiments, the relative density of a unit cell of the solid representation may be from 5% to 30%, from 5% to 40%, from 10% to 25%, or from 15% to 20%. The term "relative density" as used herein refers to an amount of a unit cell occupied by solid material as a percentage of a total volume of the unit cell.

In some embodiments, the implicit surfaces may be created using a combination of random Fourier series functions, in which linear and or nonlinear coefficient as well as linear and nonlinear variables inside sinuous and cosine terms over the x, y and z space are iterated to generate the functions. The resulting unit cells may have different planes of symmetry, such as, in various examples, zero planes of symmetry, one plane of symmetry, or more than one plane of symmetry. The function may be derived in a way that satisfies the periodicity of the unit cell. Criteria for the selection of an applicable implicit surface within the design space domain may include any one or any combination of number of terms in the equation, number of connected components, the edge boundary length, surface area, and volume fraction.

Article of footwear described herein, soles for articles of footwear described herein (for example, sole 150), and any component of the soles footwear described herein may be formed by additive manufacturing (for example, three-dimensional (3D) printing). Exemplary additive manufacturing techniques include for example, selective laser sintering, selective laser melting, selective heat sintering, stereo lithography, fused deposition modeling, or 3-D printing in general. Various additive manufacturing techniques related to articles of footwear are described for example in US 2009/0126225, WO 2010/126708, US 2014/0300676, US 2014/0300675, US 2014/0299009, US 2014/0026773, US 2014/0029030, WO 2014/008331, WO 2014/015037, US 2014/0020191, EP 2564719, EP 2424398, and US 2012/0117825. In some embodiments, the additive manufacturing process may include a continuous liquid interface production process. For example, the additive manufacturing process may include a continuous liquid interface production process as described in U.S. Pat. No. 9,453,142, issued on September 27, 2016, which is hereby incorporated in its entirety by reference thereto.

In some embodiments, 3-D printing an article of footwear, or component thereof, may comprise 3-D printing the article or component in an intermediate green state, shaping the article or component in the green state, and curing the green state in its final shape. In some embodiments, 3-D printing an article of footwear, or component thereof, may comprise 3-D printing the article or component in an intermediate green state, expanding the intermediate green state, shaping the article or component in the green state, and curing the green state in its final shape.

Techniques for producing an intermediate green state object from resins by additive manufacturing are known. Suitable techniques include bottom-up and top-down additive manufacturing, generally known as stereolithography. Such methods are known and described in, for example, U.S. Patent No. 5,236,637 to Hull, US Patent Nos. 5,391,072 and 5,529,473 to Lawton, U.S. Patent No. 7,438,846 to John, US Patent No. 7,892,474 to Shkolnik, U.S. Patent No. 8,110,135 to El-Siblani, U.S. Patent Application Publication No. 2013/0292862 to Joyce, and US Patent Application Publication No. 2013/0295212 to Chen et al. The disclosures of these patents and applications are incorporated by reference herein in their entirety.

In some embodiments, the additive manufacturing step may be carried out by one of the family of methods sometimes referred to as continuous liquid interface production (CLIP). CLIP is known and described in, for example, US Patent Nos. 9,211,678; 9,205,601; 9,216,546; and others; in J. Tumbleston et al., Continuous liquid interface production of 3D Objects, Science 347, 1349-1352 (2015); and in R. Janusziewcz et al., Layerless fabrication with continuous liquid interface production, Proc. Natl. Acad. Sci. USA 113, 11703-11708 (October 18, 2016). Other examples of methods and apparatus for carrying out particular embodiments of CLIP include, but are not limited to: Batchelder et al., US Patent Application Pub. No. US 2017/0129169 (May 11, 2017); Sun and Lichkus, US Patent Application Pub. No. US 2016/0288376 (Oct. 6, 2016); Willis et al., US Patent Application Pub. No. US 2015/0360419 (Dec. 17, 2015); Lin et al., US Patent Application Pub. No. US 2015/0331402 (Nov. 19, 2015); D. Castanon, US Patent Application Pub. No. US 2017/0129167 (May 11, 2017). B. Feller, US Pat App. Pub. No. US 2018/0243976 (published Aug 30, 2018); M. Panzer and J. Tumbleston, US Pat App Pub. No. US 2018/0126630 (published May 10, 2018); K. Willis and B. Adzima, US Pat App Pub. No. US 2018/0290374 (Oct. 11, 2018) L. Robeson et al., PCT Patent Pub. No. WO 2015/164234 (see also US Patent Nos. 10,259,171 and 10,434,706); and C. Mirkin et al., PCT Patent Pub. No. WO 2017/210298 (see also US Pat. App. US 2019/0160733). The disclosures of these patents and applications are incorporated by reference herein in their entirety.

While stereolithography techniques such as CLIP may be preferred, it will be appreciated that other additive manufacturing techniques, such as jet printing (see, e.g., US Patent No. 6,259,962 to Gothait and US Patent App. Serial No. US 2020/0156308 to Ramos et al.) may also be used.

FIG. 1 shows an article of footwear 100 according to some embodiments. Article of footwear 100 may include an upper 120 coupled to a midsole 130. Article of footwear 100 includes a forefoot end 102, a heel end 104, a medial side 106, and a lateral side 108 opposite medial side 106. In some embodiments, article of footwear 100 may include an outsole 140 coupled to midsole 130. Together, midsole 130 and outsole 140 may define a sole 150 of article of footwear 100. In some embodiments, outsole 140 may be directly manufactured (e.g., 3-D printed) on the bottom side of midsole 130. In some embodiments, outsole 140 and midsole 130 may be manufactured in one manufacturing process (e.g., one 3-D printing process). In some embodiments, outsole 140 may include a plurality of protrusions 142 to provide traction for article of footwear 100.

In some embodiments, upper 120 may include a three-dimensional mesh 132 composed of a plurality of interconnected unit cells 134. Upper 120 may include any of the three-dimensional meshes discussed herein.

In some embodiments, midsole 130 may include a three-dimensional mesh 132 composed of a plurality of interconnected unit cells 134. Midsole 130 may include any of the three-dimensional meshes discussed herein.

Each of the interconnected unit cells 134 may include a base geometry. In some embodiments, all or a portion of the interconnected unit cells 134 may include a base strut geometry. In some embodiments, all or a portion of the interconnected unit cells 134 may include a base surface geometry.

As used herein "base geometry" means the base three dimensional shape of a unit cell. A base geometry is the three dimensional shape of a unit cell in an unwarped and unmodified state (e.g., when unit cell 134 is not deformed by loading, conformed to a specific shape, or modified as described herein). The base geometry of a unit cell 134 may be, but is not limited to, a dodecahedron (e.g., rhombic), a tetrahedron, an icosahedron, a cube, a cuboid, a prism, or a parallelepiped.

As used herein "base strut geometry" means the base three-dimensional shape, connection, and arrangement of the struts and nodes defining a full unit cell. As used herein "base surface geometry" means the base three-dimensional shape of a body formed by one or more ribbons of material that define a solid representation of an implicit surface for a full unit cell. In some embodiments, the implicit surface may be a periodic implicit surface such that the base surface geometry of each unit cell contacts the base surface geometry of at least some adjacent unit cells to create a self-supporting lattice.

Upper 120 and sole 150 may be configured for a specific type of footwear, including, but not limited to, a running shoe, a hiking shoe, a water shoe, a training shoe, a fitness shoe, a dancing shoe, a biking shoe, a tennis shoe, a cleat (e.g., a baseball cleat, a soccer cleat, or a football cleat), a basketball shoe, a boot, a walking shoe, a casual shoe, or a dress shoe. Moreover, sole 150 may be sized and shaped to provide a desired combination of cushioning, stability, propulsion, and ride characteristics to article of footwear 100.

The physical characteristic(s) of soles or midsoles disclosed herein may offer a multitude of different options for customizing a sole or midsole based on one or more customization parameters provided by a user. For example, lattice shear moduli may vary between different zones or portions on sole 150 or midsole 130 to provide desired characteristics (e.g., cushioning, support, stability, ride, and/or propulsion characteristics) for an individual, or group of individuals.

As discussed herein, midsole 130, which includes a three-dimensional mesh, may be manufactured using one or more additive manufacturing methods. Additive manufacturing methods may allow for fabrication of three-dimensional objects without the need for a mold to create the three-dimensional mesh structure. By reducing or eliminating the need for molds, additive manufacturing methods may reduce costs for a manufacturer, and in turn a consumer, of a product (e.g., a shoe). Integral manufacturing of a sole and/or midsole using additive manufacturing may make the assembly of separate elements of the sole or midsole unnecessary. Similarly, an additively manufactured sole or midsole may be fabricated from single material, which may facilitate easy recycling of the sole or midsole.

Articles of footwear 100, and components thereof, described herein may be additively manufactured as a single piece, and in some embodiments may be additively manufactured of the same material. In some embodiments, upper 120 and sole 150 may be additively manufactured as a single piece.

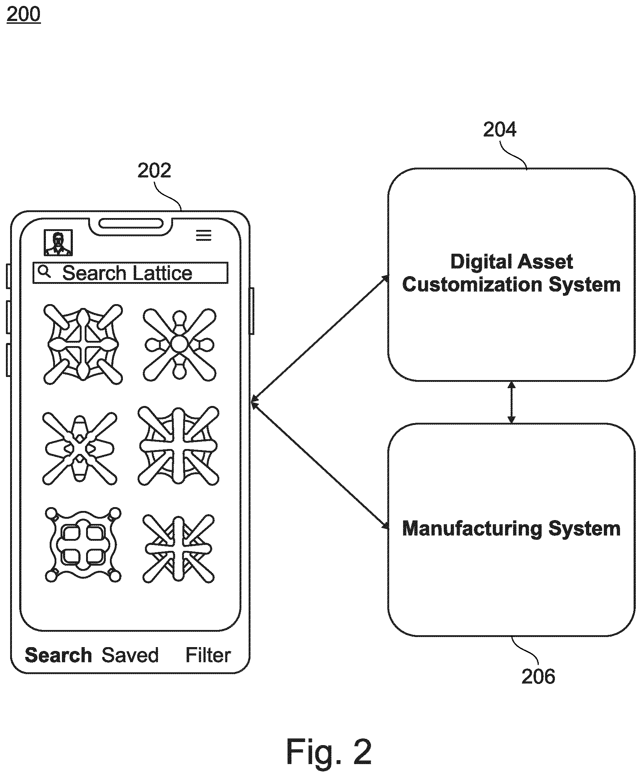

FIG. 2 provides an exemplary overview of a digital asset ecosystem 200 for creating and managing digital assets that are tied to user-customized physical apparel, such as shoes. The digital asset ecosystem 200 comprises a graphical user interface 202, which may be accessible via any computing device including a mobile device or a personal computer, an digital asset customization system 204, and a manufacturing system 206.

Graphical user interface 202 is configured to provide an interface for users to generate a digital version of an article of footwear by selecting components like upper, midsole, and/or outsole and to generate a corresponding physical version of the digital version. In some embodiments, options for the footwear components is from a predetermined list of options for each of the upper and the sole (e.g., at least one of the midsole and outsole). In some embodiments, the predetermined list may be curated to ensure that options of the components provided for selection are compatible with each other so that a physical version of the digital version is capable of being printed. For example, graphical user interface 202 may receive from a remote device, such as digital asset customization system 204, a curated set of options that are selectable for generating virtual footwear that may form the basis of both the digital asset and a corresponding physical version. That is, options for the upper and sole may be curated based on whether a physical version of their combination could practically be printed.

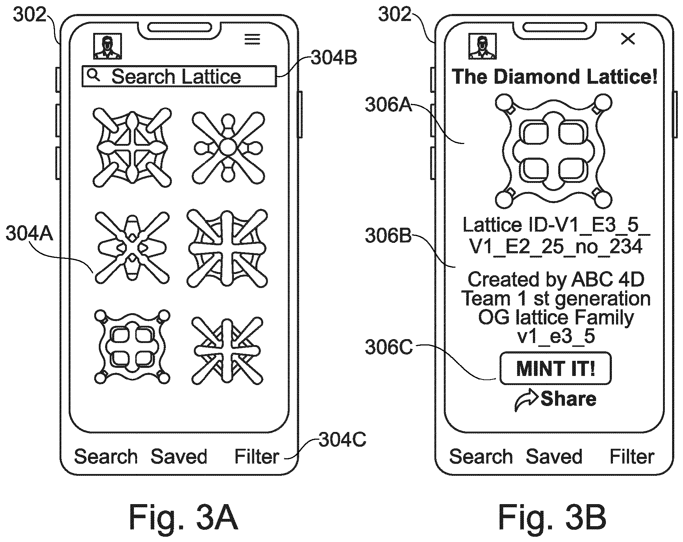

Options provided by graphical user interface 202 allow users to select, modify, and/or combine footwear components digitally to generate a unique and personalized digital image representing the customized article of footwear. For example, graphical user interface 202 may provide different screens for enabling a user to provide a selection for the upper and another selection for the sole, such as those discussed with regard to FIGs. 3A-3J below. For example, options for a sole may include any number of lattice-based structures for the sole; each lattice option may be associated with respective aesthetic and/or physical characteristics, such as cushioning, support, stability, ride, and/or propulsion characteristics. Similarly, options for the upper may also be associated with respective aesthetic and/or physical characteristics, such as cushioning, support, stability, and ride. In some embodiments, graphical user interface 202 may be configured to generate a metric or "score" for the customized footwear based on the aesthetic and/or physical characteristics of the selected upper and sole. In such embodiments, graphical user interface 202 may be configured to update the metric in real-time as the user selects different options. In some embodiments, the metric may reflect a prediction the physical characteristics of the physical footwear such as one or more of the cushioning, support, stability, ride, and/or propulsion characteristics.

The graphical user interface 202 may also include options for a user to provide additional options to further visually modify the selected components. In some embodiments, graphical user interface 202 may enable users to provide additional parameters for the selected upper and/or sole. For example, for lattice-based structures for the sole, graphical user interface 202 may enable users to modify physical aspects of the selected lattice including, but not limited to, adding text to a portion of the lattice, modifying a color or a color scheme of a portion of the lattice, embedding images or text in the lattice structure d, or any combination thereof. In some embodiments, the image or text may be visible when the sole is additively manufactured.

Digital asset customization system 204 is configured to communicate with graphical user interface 202 and manufacturing system 206 and is further configured to generate a digital asset based on the chosen customizations and user inputs provided via graphical user interface 202. Digital asset customization system 204 interfaces with graphical user interface 202 to receive the selected customization options for the footwear, which provide data on the selected components and any additional user customizations such as text, colors or color schemes, and images to be included as part of the customization of the upper or sole. Digital asset customization system 204 may then generate the digital asset based on the received customization options. The digital asset, such as an NFT, may store the selected customization options along with any other information that may be needed for manufacturing a physical version of the digital asset.

Non-limiting examples of such information include the country of origin, the identification of a manufacturing facility, previous manufacturing dates of previously printed physical versions, previous shipping dates of previously printed physical versions, the number of corresponding physical products that were produced, and any metrics associated with the digital asset and its used on tracked social media accounts, such as the number of uses (e.g., hashtags, posts) detected on a social media website or number of uses of the digital asset within a video game.

Digital asset customization system 204 may also implement personalized storage via a distributed ledger maintained by digital asset customization system 204. A digital ledger, similar to a distributed database, is configured to store user information in individual digital wallets. This ledger allows for transparent tracking of both digital and physical asset ownership, ensuring a clear link between the two. As a decentralized network of computers, the ledger provides robust security and safeguards against data manipulation. In particular implementations, this digital ledger may be configured operate within a company's internal network, facilitating seamless interaction between physical product creation and digital asset generation. Blockchain is an example of a digital ledger.

Digital asset customization system 204 may be configured to manage digital assets within an enterprise network to facilitate seamless integration across internal systems like membership, e-commerce (purchases, wallets, marketplace), security (authentication, asset tracking), and physical product management (production, shipping) as embodied, in this disclosure, by manufacturing system 206. Additionally, in certain configurations, digital asset customization system 204 may enable a distributed ledger that may connect with external systems such as third-party service providers (e.g., video game companies), physical stores, and social media platforms. In an embodiment, external systems may be implemented as an application server that provides access to third party services such as a video game server (e.g., a massive multiplayer online game) or social media servers such that digital asset customization system 204 may track use of digital assets by the third party services. Digital asset customization system 204 may utilize a distributed ledger to securely connect digital assets stored in the digital asset customization system 204 to these separate external systems.

In an embodiment, digital asset customization system 204 may facilitate additional interactions with the digital asset including providing a mechanism for users to share or sell their digital assets. Actions performed on the digital asset may be regulated by code on the distributed ledger (e.g., Blockchain) implemented by digital asset customization system 204. Examples of the code include smart contracts (for example, Ethereum network), which permits imposing conditions on the actions that may be performed using the digital asset, such as how many times the digital asset may transfer ownership, the amount of royalties that are provided to a particular party for each transaction, and authorization for printing physical versions of the digital asset. In one embodiment, the digital asset may be created using an NFT algorithm similar to the ERC-721 standard that is used within an Ethereum network.

In an embodiment, digital assets stored by digital asset customization system 204 may be configured to be static or dynamic in nature. A static digital asset refers to a digital asset representing an article of footwear (or a component thereof) that has properties, including visual characteristics of the digital assets and physical properties of the article of footwear (or footwear component), that are static and do not change while the digital asset is active. In contrast, a dynamic digital asset refers to a digital asset representing article of footwear (or a component thereof) that has dynamic properties that may be updated while the digital asset is active. For example, digital asset customization system 204 may establish a link between the digital asset and one or more real world metrics such as social media mentions and the actions of that involve physical product in the real world (e.g., by prior owners of the digital asset, by an athlete in a sporting event, etc.). That is, in some embodiments, a smart contract associated with the digital asset may include a condition linking the digital asset to a real-world person, such as an athlete or celebrity endorser. For example, the digital asset may be linked to actions or metrics associated with an athlete, such as the athletes performance in certain games. Aspects of the digital asset can be updated based on these actions. Each time these attributes are updated (e.g., as the number of social media mentions increases), the digital assets associated with the physical product may be updated to reflect the new attributes.

Dynamic updates to digital assets by digital asset customization system 204 increase the visual and physical properties of the digital assets and their corresponding physical versions to reflect changes in the real-world and therefore may increase the value and utility of the digital assets for the owner. Updating visual and physical properties of the digital assets and corresponding physical versions may also increase the rarity of each asset. In an embodiment, updating of the digital assets may be implemented using smart contracts stored in a distributed ledger maintained by digital asset customization system 204. Digital asset customization system 204 may track real-world data, which may be provided via connections to external system, such as metrics associated with the digital asset and any related physical products. In such embodiments, asset customization system 204 may deliver the data to corresponding blocks that store linked digital assets and utilize smart contracts on the those blocks to parse the data and perform updates on the digital assets.

Smart contracts may generated to impose one or more conditions on ownership of the digital asset. These conditions may include, but are not limited to, number of purchases of the physical version of the digital asset, number of possible prints of the physical version, number of owners, number and types of possible ownership transfers, and royalty amounts to be transferred to the manufacturer of the digital asset for each transaction involving the digital asset. In some embodiments, the manufacturer of the footwear is the manufacturer for generating the digital assets, their associated smart contracts, and the conditions as discussed above. As one non-limiting example, one condition from a smart contract may impose restrictions by associating stock keeping unit (SKU) numbers with the digital asset such that purchasing physical versions of the digital asset is limited to those who have access to the SKU numbers.

In an embodiment, updating of digital assets includes changing one or more visual characteristics of the article of footwear (or component thereof) represented by the digital asset. In an embodiment, when first generated, the digital asset may include a multi-dimensional (e.g., 2-d or 3-d) digital representation of an article of footwear, such as a shoe (or multiple shoes), or a component thereof, such as a shoe sole (or multiple shoe soles). As digital asset customization system 204 updates a digital asset based on a metric (e.g., owner usage of the physical version, social media usage of the digital asset), the visual characteristics of the digital representation may be updated to reflect those changes. For example, digital asset customization system 204 may update a visual characteristic of a digital asset that is linked to a popularity of the digital asset on social media platforms (e.g., a counter representing the number of mentions, images of the digital asset being posted on social media accounts).

In some embodiments, the digital asset may include visual and/or physical performance customizations that may be unlocked based on one or more conditions associated with the digital asset. For example, a specific number of social media mentions may trigger a new color scheme or lattice structure to be used with the digital asset. As one example, the digital asset customization system 204 may retrieve social media activity of all historical owners of the digital asset. This information may be retrieved dynamically through connections between the digital asset customization system 204 and external systems, and alternatively or additionally with information that is already stored in the distributed ledger associated with the digital asset owned by the owners. If a total number of posts or other social media activity by the owners has reached a certain threshold, then digital asset customization system 204 may unlock visual characteristics of the digital asset and update the digital assets for each of the users. As another example, digital asset customization system 204 may link an owner's physical activity (e.g., a number of steps, heart rate) that is tracked via a personal fitness device (e.g., a smartwatch) to available customizations of the digital asset. That is, usage of a corresponding physical version of a digital asset may result in a corresponding change in the digital representation in the digital asset.

Digital asset customization system 204, through the use of a digital ledger and smart contracts, is therefore configured to monitor ownership and use of digital assets, and also to link ownership of the digital asset to actions that may be performed on a corresponding physical version of the digital asset. That is, a digital asset, to some extent, serves as a tokenized entitlement claim to a corresponding physical version of the footwear represented by the digital asset, which may store various attributes of a physical shoe (or component thereof) such as those pertaining to its physical features. Examples of ownership actions include transferring ownership of the digital asset, purchasing physical versions of the digital asset, such as physical footwear, selling the digital asset, and burning the digital asset.

Manufacturing system 206 is configured to manufacture the customized footwear based on data from the digital asset and based on instructions received from graphical user interface 202 and/or digital asset customization system 204. Ownership of the digital asset grants the owner the right to initiate the physical creation of the virtual footwear or footwear component embodied by the asset. For example, a user may submit a request through graphical user interface 202 by selecting any digital asset owned by the user (e.g., that is stored in a digital storage location associated with the user). Digital assets owned by the user may be any combination of digital assets that the user has customized and generated via graphical user interface 202 as well as digital assets whose ownership has been transferred to the user, e.g., between user accounts on a distributed ledger maintained by digital asset customization system 204. Manufacturing system 206 may control production systems that produce the physical versions products. For example, manufacturing system 206 may connect to a production facility that produces footwear.

Therefore, the embodiments described herein of the digital asset ecosystem 200 allow for the creation and management of digital assets and corresponding physical products via digital asset customization system 204 that coordinates the storage and distribution of information associated with the digital assets, the corresponding physical products, and users, all of which may be implemented within the context of an enterprise system. That is, the digital asset customization system 204 utilizes the advantages of a distributed ledger to connect disparate systems both in and outside of an enterprise system in a secure manner as well as for the dynamic generation and coordination of new digital assets based on user activity that is stored across those systems.

FIGs. 3A-3N display exemplary interfaces on a computing device for creating and managing digital assets that are tied to user-customized physical apparel, such as shoes or shoe components. The computing device may include any type of computing device that is capable of remotely connecting with digital asset customization system 204 and/or manufacturing system 206. Examples of computing devices include mobile devices, personal computers, and laptops.

FIG. 3A illustrates an exemplary graphical user interface 302 that includes a lattice selection interface 304A for displaying different lattice options that are selectable via a user input on the graphical user interface 302. Graphical user interface 302 may include a search bar 304B for receiving additional user input for searching lattice options including different lattice structures and configurations and a command bar 304C for displaying available commands for accessing lattice options. For example, command bar 304C may include commands for accessing search bar 304B, accessing any saved/favorite lattice structures associated with the user account, and accessing filtering options to filter lattice structures.

For example, filtering options for the lattice structure may include aesthetic and/or physical properties such as cushioning, stability, propulsion, and ride characteristics. Other properties of the lattice structure may include customization of the lattice structure, such as personalization of the lattice to include text or an image, stiffness preferences, and size. The term "ride" may be used herein in describing a sense of smoothness or flow occurring during a gait cycle including heel strike, midfoot stance, toe off, and the transitions between these stages. Lattice selection interface may be configured to display information regarding ride features associated with each lattice structure, including, but not limited to, appropriate control of pronation and supination, support of natural movement, support of unconstrained or less constrained movement, appropriate management of rates of change and transition, and combinations thereof. Another exemplary filtering option is the type of shoe to be generated such as a running shoe, a hiking shoe, a water shoe, a training shoe, a fitness shoe, a dancing shoe, a biking shoe, a tennis shoe, a cleat (e.g., a baseball cleat, a soccer cleat, or a football cleat), a basketball shoe, a boot, a walking shoe, a casual shoe, or a dress shoe. Lattice selection interface 304A may display options for the lattice structure based on one or more filtering options.

FIG. 3B illustrates graphical user interface 302 that includes a lattice confirmation screen 306A which includes a lattice information box 306B and lattice options 306C. Lattice confirmation screen 306A may be presented by graphical user interface 302 subsequent to a user selection of a lattice option on lattice selection interface 304A. Lattice information box 306B may be configured to display information about the selected lattice such as a unique lattice identifier, creator information, and lattice lineage information, which may include information about whether the lattice is a first generation lattice or subsequent generation (e.g., a lattice that has gone through different iterations over time). Lattice options 306C may include options for generating a digital asset based on the selected lattice option, or if a digital asset for the selected lattice option already is available, minting the digital asset onto the distributed ledger maintained by digital asset customization system 204. Minting the digital asset refers to publishing the digital asset onto the distributed ledger which allows operations to be performed on the digital asset, such as buying, selling, and transferring. Other options in lattice options 306C include an option to publish the lattice-based digital asset onto any connected external 3^{rd} party servers such as social media services.

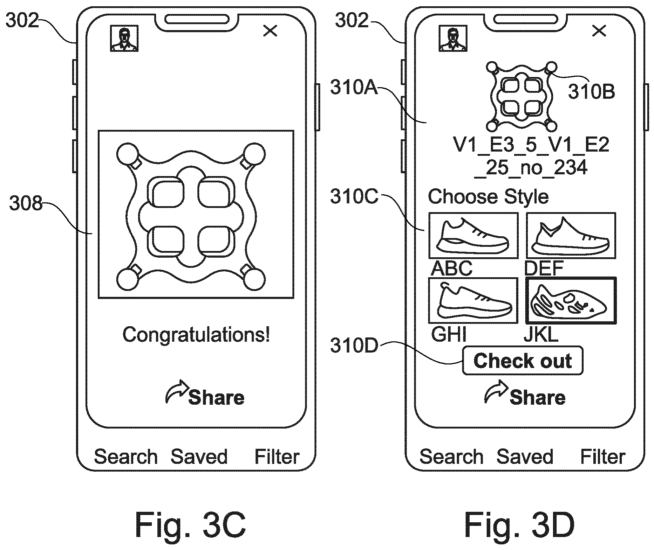

FIG. 3C illustrates graphical user interface 302 that includes a minting screen 308 for displaying the lattice-based digital asset.

FIG. 3D illustrates graphical user interface 302 that includes a virtual component selection screen 310A for providing additional user selectable options for generating virtual footwear based on selected components, including the previously selected lattice structure (FIG. 3A) and an upper. Although FIG. 3D depicts virtual component selection screen 310A with two configurable options (i.e., a lattice structure and an upper), it is understood that virtual component selection screen 310A may be configured to provide any number of user selectable options that correspond to different components of footwear including the upper, different portions of the upper, the midsole, and the outsole.

Virtual component selection screen 310A may further include a selection confirmation section 310B for confirming prior selections of components. In the embodiment shown in FIG. 3D, selection confirmation screen 310B provides visual confirmation of a lattice structure that was previously displayed in lattice selection interface 304A. Virtual component selection screen 310A may further include a screen for displaying and receiving selections of components for the virtual footwear. In the embodiment shown in FIG. 3D, second component selection section 310C provides various selectable options for an upper to be combined with the selected lattice structure as visualized by selection confirmation screen 310B. Virtual component selection screen 310A may further include checkout options 310D for completing the selection process and proceeding to the next step of the sequence. In some embodiments, options for the upper may include, but are not limited to, a knit upper, which may be formed by flat knitting or circular knitting, a sock-type upper, and an upper made of a woven material.

Components depicted in virtual component selection screen 310A may be displayed based on the type of footwear that is being generated similar to the filtering options discussed above with respect to the lattice structures. For example, there are different options for an upper may be configured for a specific type of footwear, including, but not limited to, a running shoe, a hiking shoe, a water shoe, a training shoe, a fitness shoe, a dancing shoe, a biking shoe, a tennis shoe, a cleat (e.g., a baseball cleat, a soccer cleat, or a football cleat), a basketball shoe, a boot, a walking shoe, a casual shoe, or a dress shoe.

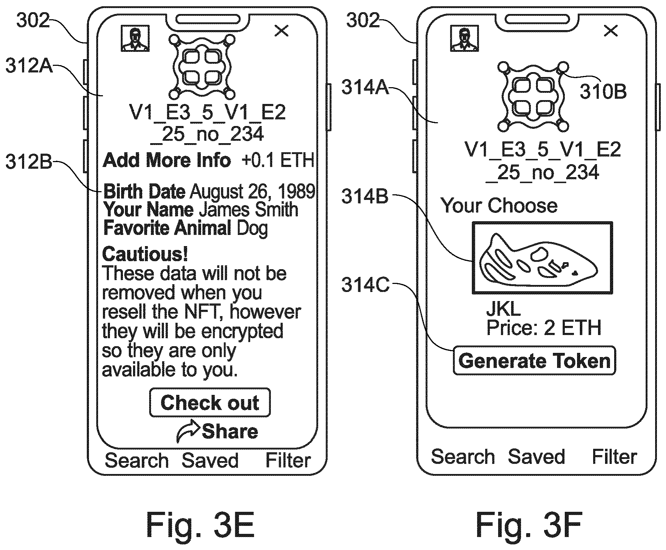

FIG. 3E illustrates graphical user interface 302 that includes a lattice structure information screen 312A that is configured to provide additional information about the lattice structure that was selected via lattice selection interface 304A. Lattice structure information screen 312A may be configured to display lattice customization information 312B such as user information (e.g., birthday, user name, preferences) that are encoded with the selected lattice structure when generating the digital asset. Although certain information is illustrated in FIG. 3E, it is understood that lattice customization information 312B may be configured to display any type of customization information associated with the lattice structure including options selected by the user for personalizing the lattice structure, such as color schemes, text, and images.

FIG. 3F illustrates graphical user interface 302 that includes a component confirmation screen 314A for displaying all selected components for generating the digital asset. In this embodiment, component confirmation screen 314A includes selection confirmation screen 310B that provides visual confirmation of a lattice structure that was previously selected in lattice selection interface 304A, and a second selection confirmation screen 314B that provides visual confirmation of an upper that was previously selected in selection confirmation screen 310B. Component confirmation screen 314A may permit the user to revise selections, such as by selecting the selected component, which return the graphical user interface 202 to the selection screen associated with that component. For example, selection of the upper displayed by the second selection confirmation screen 314B may return the graphical user interface 302 back to selection confirmation screen 310B to allow the user to select a different option for the upper. Component confirmation screen 314A may also include an option 314C for generating a digital asset based on a combination of the selected components depicted by selection confirmation screen 310B and second selection confirmation screen 314B.

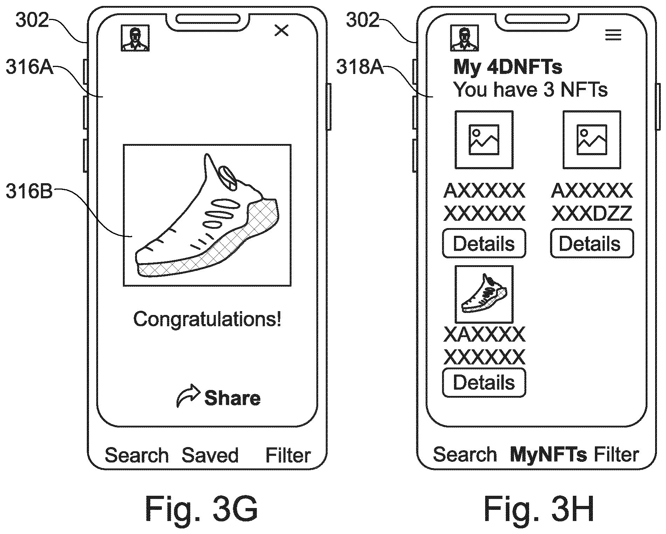

FIG. 3G illustrates graphical user interface 302 that includes digital asset confirmation screen 316A that provides visual confirmation of the generated digital asset. Digital asset confirmation screen 316A includes a digital asset interface 316B for displaying the virtual footwear that was generated based on the components selected via selection screens and user customization options discussed above with respect to FIGS. 3A-3F. In some embodiments, the digital asset may be generated taking into account any manufacturing considerations associated with a physical version of the virtual footwear such that the digital asset represents an accurate depiction of the physical version. That is, generation of the digital asset takes into account how the selected components may be arranged and combined in a physical version. These considerations include how the upper is to be connected to the sole, the material properties of the upper, the type of footwear, and any user customization options.

In some embodiments, the digital asset provides a three-dimensional view of the virtual footwear such that digital asset interface 316B is configured to receive user input to rotate, zoom, and otherwise manipulate the visual image of the virtual footwear to provide alternative views of the virtual footwear.

In some embodiments, the computing device on which graphical user interface 302 is implemented is configured to generate the digital asset (i.e., locally) based on the selected components. Graphical user interface 302 may then be configured to transmit the generated digital asset to digital asset customization system 204 for storage in a location of a distributed ledger that is associated with the user.

In some embodiments, graphical user interface 302 communicates the selected components (received via the various selection screens) to digital asset customization system 204, which is configured to generate the digital asset based on the received components. Digital asset customization system 204 may then store the generated digital asset in a distributed ledger location associated with the user and may provide graphical user interface 302 access to the digital asset.

FIG. 3H illustrates graphical user interface 302 that includes a digital asset summary interface 318A for displaying any digital assets associated with a user account. Graphical user interface 302 may retrieve digital assets associated with any user account from digital asset customization system 204 and display the assets on digital asset summary interface 318A. Digital assets may include digital assets for individual components, such as personalized lattice structures or uppers, as well as virtual footwear. Digital asset summary interface 318A may also include digital asset options 318B for accessing and manipulating any of the displayed digital assets.

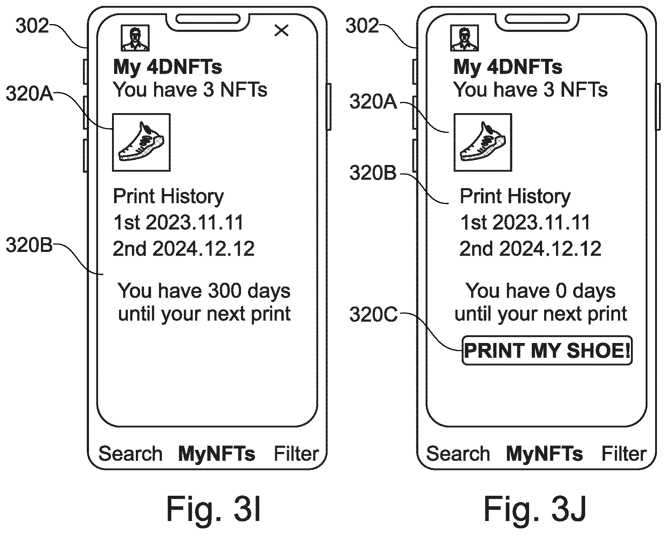

FIG. 3I illustrates graphical user interface 302 that includes print information screen 320A for displaying information about printing a digital asset. Print information screen 320A may include print information section 320B for displaying print-related information such as a print history and print authorization indicating whether the user is authorized to print the digital asset. In embodiments including print authorization information, the print authorization may indicate the number of days until the user is authorized to print the digital asset. For example, print information section 320B indicates that the user is currently not authorized to issue a print command for the digital asset. In FIG. 3J print information section 320B indicates that the user is currently authorized to issue a print command and, accordingly, print information screen 320A includes a print option 320C. Selection of print option 320C causes graphical user interface 302 to send instructions for printing the selected digital asset. In some embodiments, graphical user interface 302 may communicate instructions to manufacturing system 206 directly or via digital asset customization system 204.

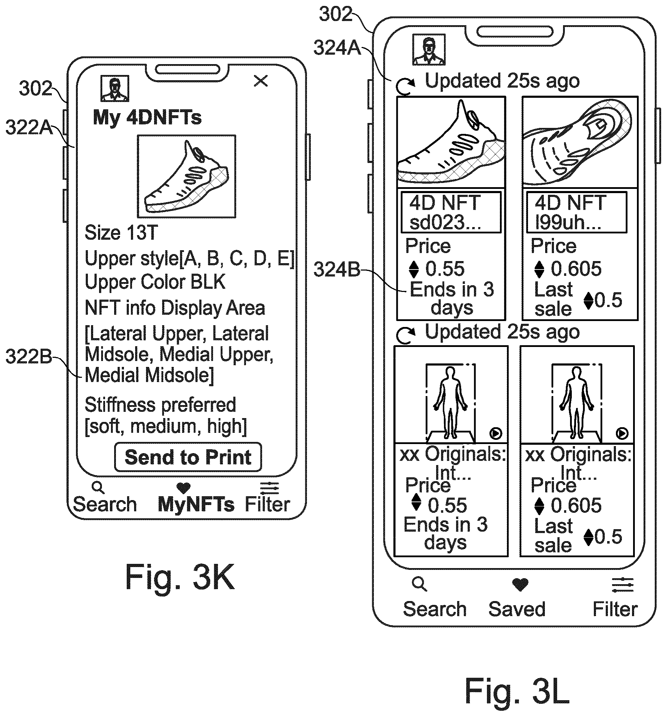

FIG. 3K illustrates graphical user interface 302 that includes a second type of print information screen 322A for displaying more information about the digital asset including footwear information 322B such as the size of the shoe, the style of the selected upper, the colorway for the upper, colorway for the sole, information about the various components including lateral upper, lateral midsole, medial upper, and medial midsole, as well as other physical properties of the footwear such as stiffness, cushioning, stability, propulsion, and ride characteristics. Print information screen 322A also provides an option for printing the digital asset.

A physical version of the digital asset may be printed responsive to the graphical user interface 302 sending instructions (e.g., to digital asset customization system 204) and based on information about the selected components of the footwear. For example, information about the selected lattice structure may be used to generate or modify unit cells that form the lattice structure. Unit cells as described herein may be either a physical object or a three-dimensional digital model of a three-dimensional object. Generating or otherwise modifying a unit cell as described herein may be carried out with computer modeling software. The design process may therefore result in the unit cell as a three-dimensional digital model. The digital model may then be used as a basis for fabricating a physical object, such as, for example, by use of "slicing" software to generate instructions for an additive manufacturing device. The additive manufacturing device may then create the unit cell as a physical object by following the instructions. Accordingly, any properties related to the shape and size of the unit cell illustrated or described herein are true of both the unit cell as a three-dimensional digital model and the unit cell as a physical object unless specified otherwise.

In some embodiments, the digital asset may store a unique unit cell and a design space, such as a midsole volume. The information associated with the unique unit cell may specify a specific behavior of the lattice, such as compressive behavior and distribution of plantar pressure. Each of these behaviors may be tunable and stored as part of the digital asset in addition to a design space (e.g., midsole volume). In some embodiments, other aspects of the lattice are not stored with the digital asset, for example user customizations such as name, images printed on the outsole, stiffness preferences, and size.

FIG. 3L illustrates graphical user interface 302 that includes a marketplace interface 324A to enable a user to sell, purchase, and transfer ownership of digital assets. Marketplace interface 324A may display digital assets 324B that are available for sale, purchase, and/or trading between registered users of the marketplace. In some embodiments, marketplace interface 324A may include options for filtering digital assets based on the type of components used in generating the virtual footwear (or component thereof). For example, marketplace interface 324A may be configured to filter digital assets 324B based on whether the selected sole component is a lattice structure or whether any or all of the components were additively manufactured.

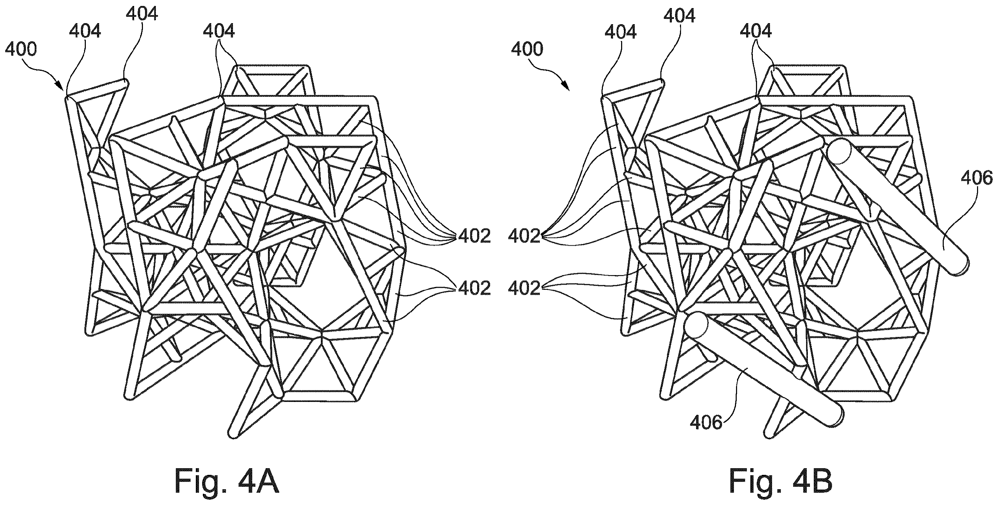

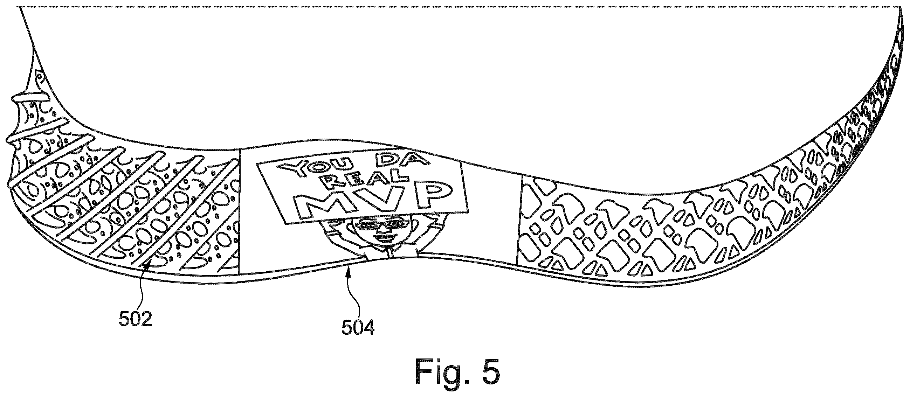

FIGS. 4A-C illustrate exemplary unit cells of lattice structures and FIG. 5 illustrates an exemplary sole formed from an exemplary lattice structure.

FIG. 4A illustrates a digital unit cell 400, including a structure of struts 402 and nodes 404 having a base strut geometry according to some embodiments. The arrangement of struts 402 in unit cell 400 form a base strut geometry that approximates an implicit surface.

A base strut geometry that approximates an implicit surface in the manner that the base strut geometry of unit cell 400 approximates the shape of an implicit surface may be designed in a process that includes identifying the implicit surface to be approximated, representing the implicit surface with polygons, and placing struts along edges of the polygons. The process may be applied to any implicit surface. The implicit surface identified to be approximated may therefore depend on the desired properties for a lattice to be made from the unit cells resulting from the design process, which may include receiving a selection of a lattice structure for the sole (or midsole) and a selection of a design and material for the upper, in addition to any user selected customizations of the selected lattice structure and/or the upper. A polygon mesh representation of the implicit surface may then be created based on the selected lattice structure and, if applicable, any user selected customizations (e.g., text, color, color scheme, image) to be incorporated into the mesh. The creation of the polygon mesh may optionally include representing the polygon mesh as a digital model, though modeling the mesh is not a necessary step of the design process. The creation of the polygon mesh in any embodiment of the present disclosure may be done according to any method usable for converting a curved surface to a polygon mesh, including, in some embodiments, any known process used for representing curved surfaces in computer graphics. For example, any polygon mesh mentioned herein may be created by any process for creating a polygon mesh from a shape or surface. Certain such processes are known, for example, in the field of computer rendering, though suitable meshing processes for the purposes of the present disclosure are not limited thereto. The base strut geometry may then be defined by placing a strut along each edge of each polygon in the polygon mesh. Each strut may have the same endpoints as the edge along which the strut is placed. A node may be placed at every vertex where two edges of any polygon meet.

That is, unit cell 400 may optionally be the result of any of the processes described above for creating a digital model of unit cell 400, and unit cell 400 may have any of the properties of the digital model of unit cell 400. Thus, unit cell 400 includes struts 402 connected to one another at nodes 404.

While FIG. 4A shows an arrangement of struts 402 in unit cell 400 that approximates an implicit surface, any base strut geometry or base surface geometry for unit cells of a lattice structure as described herein may be created in a similar fashion as described for the base strut geometry shown in FIG. 4A. Base strut geometries may be created based on a known or unique lattice structure, for example a body-centered cubic lattice or a face-centered cubic lattice. In some embodiments, lattice structures may be stored in a database.

As noted above, graphical user interface 202 may provide selectable options for users to modify lattice structures. These options may result in corresponding modifications to the lattice structure, which may include modifications to one or more unit cells based on the selectable options (e.g., color, text etching, color scheme, and incorporating images into the overall lattice structure). For example, in some embodiments, modifications to the one or more unit cells may result in placement of beams 406 across unit cells 400 as shown in FIG. 4B, then modifying the unit cells 400 to accommodate the beams 406, thereby creating partially modified unit cells. Beams 406 may extend across multiple partially modified unit cells and therefore may appear in different places within the partially modified cells. Thus, the placement of beams 406 relative to the unit cell 400 is only an example, and other beams 406. Beams 406 may extend continuously across multiple unit cells at an exterior of a compound lattice forming a sole.

In some embodiments, modifying unit cell 400 to accommodate beams 406, thereby resulting in a partially modified cell, may include aligning some nodes 404 on beams 406. Struts 402 connected to nodes 404 that are relocated to become aligned on beams 406 may be rotated, lengthened, shortened, or any combination of rotated, lengthened, and shortened to remain connected to the relocated nodes 404. In some embodiments, some nodes 404 relocated during the conversion of unit cell 400 may be moved to lie on beam 406 at an edge of a cubic space within which a partially modified cell is defined.

The relocation of nodes 404 to place nodes on beams 406 may include identifying nodes 404 in unit cell 400 within a predefined distance of any beam 406, then moving each identified node 404 to a respective nearest point on any beam 406. The predefined distance may be proportional to a size of unit cell 400.

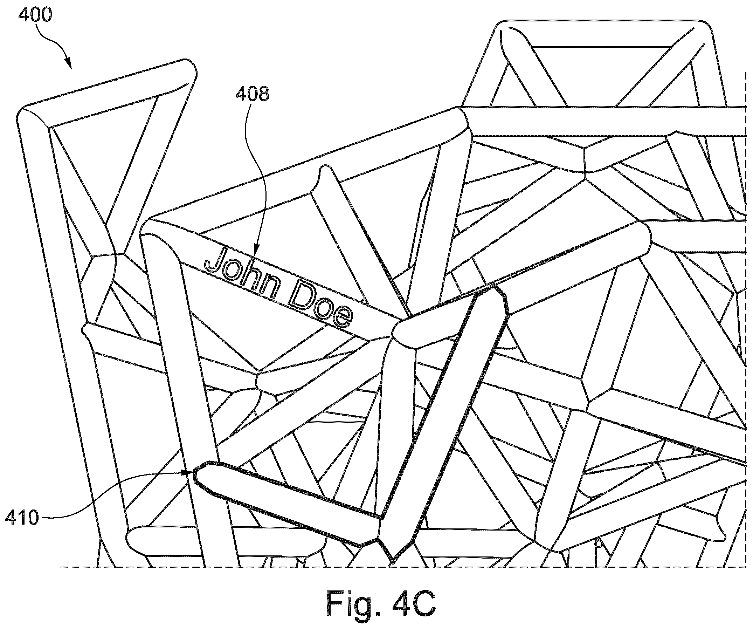

FIG. 4C illustrates other exemplary modifications to a lattice structure of unit cell 400 based on one or more user selected customization options provided by a user via graphical user interface 202. For example, a customization option may include the addition of text 408 onto one or more struts of unit cell 400. As another example, another customization option may include selecting an alternative color 410 of one or more struts of unit cell 400.

FIG. 5 illustrates an exemplary virtual representation of footwear that includes a customization option for incorporating an image 504 onto the lattice structure of a midsole 502. In some embodiments, this may be accomplished by adjusting the color of various struts to achieve the effect of imprinting image 504 onto the lattice structure such that image 504 is visible when midsole 502 is viewed from a side view.

In some embodiments, adjustment of the color of the struts is performed automatically based on the provided image 504 such that the user only needs to upload image 504 (e.g., via graphical user interface 202) and digital asset customization system 204 may automatically determine which struts of the lattice needs to be modified in order to display image 504 within the lattice structure.

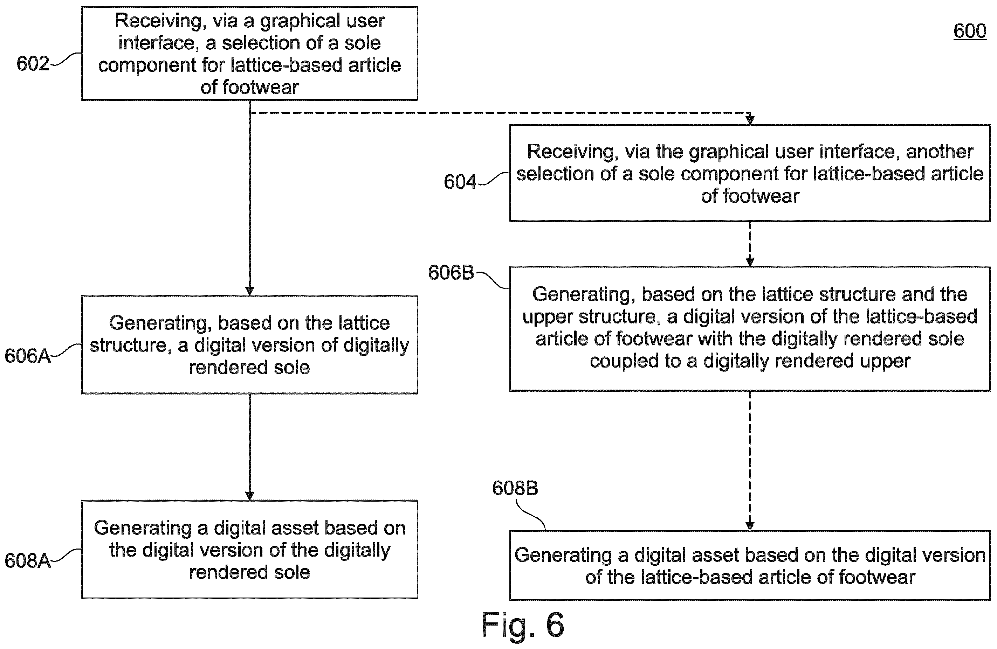

FIG. 6 illustrates is a flowchart illustrating a method 600 of processing digital and physical products. As a non-limiting example with regards to FIGS. 2 and 3A-3L, one or more processes described with respect to FIG. 6 may be performed by a user device (e.g., user device implementing graphical user interface 202 of FIG. 2) or a server (e.g., digital asset customization system 204 of FIG. 2 and/or manufacturing system 206 of FIG. 2). In such an embodiment, any of these components may execute code in memory to perform certain steps of method 600 of FIG. 6. While method 600 of FIG. 6 will be discussed below as being performed by a user device implementing graphical user interface 202, other devices may store the code and therefore may execute method 600 by directly executing the code. Accordingly, the following discussion of method 600 will refer to components of FIG. 2 as an exemplary non-limiting embodiment of method 600. Moreover, it is to be appreciated that not all steps may be needed to perform the disclosure provided herein. Further, some of the steps may be performed simultaneously or in a different order than shown in FIG. 6, as will be understood by a person of ordinary skill in the art.

In 602, graphical user interface 202 receives a selection of a sole component for the lattice-based article of footwear, such via interfaces discussed above with respect to FIGS. 3A-3D. In some embodiments, selection of the sole component may include selection of a lattice structure that will be formed, using an additive manufacturing process such as 3-D printing, into the sole of the article of footwear. In some embodiments, the term lattice refers to any structure that may form the basis of an additively manufactured sole; that is, limitations on the types of structures that may be considered a lattice are limited only by any limitations associated with additive manufacturing.

In some embodiments, graphical user interface 202 also provides user customization inputs for adjusting physical and/or aesthetic properties of the selected component. Non-limiting examples of user customization inputs for aesthetic properties include color scheme, lattice color, text, and images to be imprinted within the lattice structure of the sole component. Non-limiting examples of user customization inputs for physical properties include values for cushioning, stability, propulsion, and ride characteristics.

In embodiments where the digital asset comprises the sole component only, method 600 may proceed directly to 606A. Otherwise, in embodiments where the digital asset comprises an upper, method 600 may proceed to step 604 where graphical user interface 202 receives a second selection of an upper structure for the lattice-based article of footwear. In some embodiments, selection of the upper structure may include selection of customization options for the upper structure.

In 606A, graphical user interface 202 generates, based on the selection of the sole component, a digital version of the sole component including a digitally rendered sole. In some embodiments, digital asset customization system 204 generates the digital version of the sole component and provides the digital version to the graphical user interface 202 for display as part of the digital asset. In some embodiments, the digital asset is configured to provide different views of the virtual sole component (via graphical user interface 202) and those views may be manipulated via user input to, for example, zoom and rotate the virtual sole component. In 606B, graphical user interface 202 generates, based on the selections of both the sole component and the upper structure, a digital version of the lattice-based article of footwear including a digitally rendered sole coupled to a digitally rendered upper. That is, graphical user interface 202 may combine the selected sole component and the selected upper structure to form a virtual version of the footwear. In some embodiments, the combination of the selected components takes into account manufacturing considerations such that the virtual version of the footwear may be manufactured, such as via an additive manufacturing process. In some embodiments, digital asset customization system 204 generates the digital version of the footwear and provides the digital version to the graphical user interface 202 for display as part of the digital asset. In some embodiments, the digital asset is configured to provide different views of the virtual footwear (via graphical user interface 202) and those views may be manipulated via user input to, for example, zoom and rotate the virtual footwear. In some embodiments, the digital asset may store manufacturing details, akin to a recipe, for manufacturing the physical version of the shoe. The manufacturing details may configured to be read by a manufacturing tool that converts the manufacturing details into a geometry that is viable to be manufactured.

In some embodiments of either or both 606A and 606B, graphical user interface 202 is also configured with customization tools to enable a user to provide additional customization inputs directly into the digital asset. For example, graphical user interface 202 may enable users to select or otherwise manipulate different components of the virtual footwear (after it has been generated) to provide additional modifications to the aesthetic and/or physical properties of the components. Graphical user interface 202 is further configured to display, in real-time, the effect of those customizations on the virtual footwear, such as displaying modifications to the virtual footwear as the graphical user interface 202 receives the user provided customizations.

In 608A, graphical user interface 202 generates the digital asset that includes the digital version of the sole component. Generation of the digital asset may include additional steps of displaying the digital asset via the graphical user interface 202. In some embodiments, the digital asset is generated by digital asset customization system 204; and in some embodiments, the digital asset is generated via coordination between both the graphical user interface 202 and digital asset customization.

In 608B, graphical user interface 202 generates the digital asset that includes the digital version of the lattice-based article of footwear that includes both the sole component and the upper. Generation of the digital asset may include additional steps of displaying the digital asset via the graphical user interface 202. In some embodiments, the digital asset is generated by digital asset customization system 204; and in some embodiments, the digital asset is generated via coordination between both the graphical user interface 202 and digital asset customization.

### Exemplary Computer System

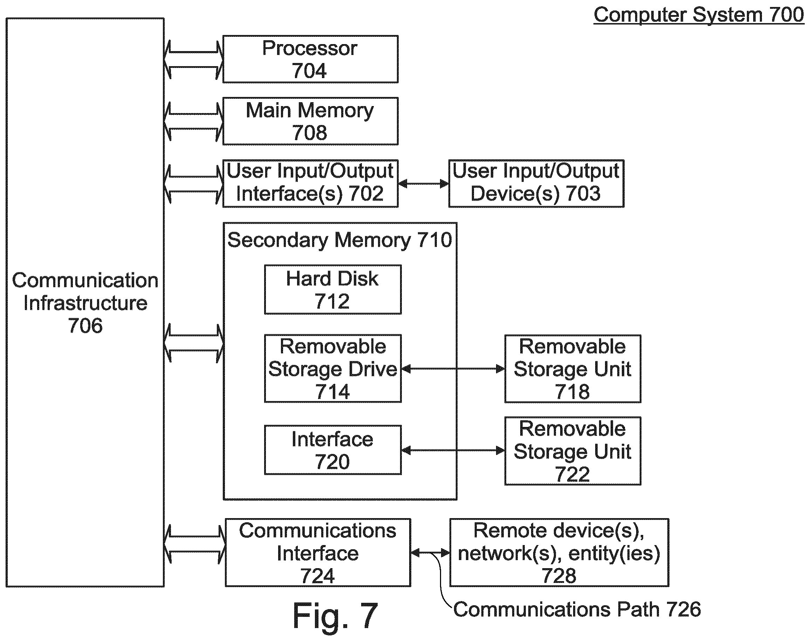

Various embodiments may be implemented, for example, using one or more well-known computer systems, such as computer system 700 shown in FIG. 7. One or more computer systems 700 may be used, for example, to implement any of the embodiments discussed herein, as well as combinations and sub-combinations thereof.

Computer system 700 may include one or more processors (also called central processing units, or CPUs), such as a processor 704. Processor 704 may be connected to a communication infrastructure or bus 706.

Computer system 700 may also include user input/output device(s) 703, such as monitors, keyboards, pointing devices, etc., which may communicate with communication infrastructure 706 through user input/output interface(s) 702.

One or more of processors 704 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 700 may also include a main or primary memory 708, such as random access memory (RAM). Main memory 708 may include one or more levels of cache. Main memory 708 may have stored therein control logic (i.e., computer software) and/or data.

Computer system 700 may also include one or more secondary storage devices or memory 710. Secondary memory 710 may include, for example, a hard disk drive 712 and/or a removable storage device or drive 714. Removable storage drive 714 may be a floppy disk drive, a magnetic tape drive, a compact disk drive, an optical storage device, tape backup device, and/or any other storage device/drive.

Removable storage drive 714 may interact with a removable storage unit 718. Removable storage unit 718 may include a computer usable or readable storage device having stored thereon computer software (control logic) and/or data. Removable storage unit 718 may be a floppy disk, magnetic tape, compact disk, DVD, optical storage disk, and/ any other computer data storage device. Removable storage drive 714 may read from and/or write to removable storage unit 718.

Secondary memory 710 may include other means, devices, components, instrumentalities or other approaches for allowing computer programs and/or other instructions and/or data to be accessed by computer system 700. Such means, devices, components, instrumentalities or other approaches may include, for example, a removable storage unit 722 and an interface 720. Examples of the removable storage unit 722 and the interface 720 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 700 may further include a communication or network interface 724. Communication interface 724 may enable computer system 700 to communicate and interact with any combination of external devices, external networks, external entities, etc. (individually and collectively referenced by reference number 728). For example, communication interface 724 may allow computer system 700 to communicate with external or remote devices 728 over communications path 726, which may be wired and/or wireless (or a combination thereof), and which may include any combination of LANs, WANs, the Internet, etc. Control logic and/or data may be transmitted to and from computer system 700 via communication path 726.

Computer system 700 may also be any of a personal digital assistant (PDA), desktop workstation, laptop or notebook computer, netbook, tablet, smart phone, smart watch or other wearable, appliance, part of the Internet-of-Things, and/or embedded system, to name a few non-limiting examples, or any combination thereof.

Computer system 700 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 700 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. Alternatively, proprietary data structures, formats or schemas may be used, either exclusively or in combination with known or open standards.

In an embodiment, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 700, main memory 708, secondary memory 710, and removable storage units 718 and 722, as well as tangible articles of manufacture embodying any combination of the foregoing. Such control logic, when executed by one or more data processing devices (such as computer system 700), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 7. In particular, embodiments can operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more but not all exemplary embodiments of the present invention(s) as contemplated by the inventors, and thus, are not intended to limit the present invention(s) and the appended claims in any way.

While this disclosure describes exemplary embodiments for exemplary fields and applications, it should be understood that the disclosure is not limited thereto. Other embodiments and modifications thereto are possible and are within the scope and spirit of this disclosure. For example, and without limiting the generality of this paragraph, embodiments are not limited to the software, hardware, firmware, and/or entities illustrated in the figures and/or described herein. Further, embodiments (whether explicitly described herein) have significant utility to fields and applications beyond the examples described herein.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

Some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The foregoing description of the specific embodiments will so fully reveal the general nature of the invention(s) that others can, by applying knowledge within the skill of the art, readily modify and/or adapt for various applications such specific embodiments, without undue experimentation, and without departing from the general concept of the present invention(s). Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance herein.

The breadth and scope of the present invention(s) should not be limited by any of the above-described exemplary embodiments, but should be defined only in accordance with the following claims and their equivalents.

### FURTHER EMBODIMENTS

Embodiment 1: A method for generating one or more digital assets representative of a lattice-based footwear article, comprising:
receiving, via a graphical user interface, a selection of a sole component for the lattice-based footwear article, wherein the selection comprises a selected lattice structure,
and wherein the graphical user interface is configured to display a plurality of lattice structures including the selected lattice structure;
generating, based on the selected lattice structure, a digital version of the lattice-based footwear article including a digitally rendered sole, wherein the digitally rendered sole depicts an additively manufactured mesh component generated based on the selected lattice structure; and
generating a digital asset comprising the digital version of the lattice-based footwear article, wherein the digital version of the lattice-based article is configured to be manipulable via a user input received via the graphical user interface.

Embodiment 2: The method of Embodiment 1, further comprising:
receiving, via the graphical user interface, an additional selection of an upper structure for the lattice-based footwear article;
updating the digital version of the lattice-based footwear article to include the digitally rendered sole coupled to a digitally rendered upper, wherein the digitally rendered upper depicts the upper structure; and
generating a second digital asset comprising a second digital version of the lattice-based footwear article.

Embodiment 3: The method of Embodiment 1 or 2, further comprising:
storing the digital asset in a digital location associated with a user.

Embodiment 4: The method of Embodiment 3, further comprising:
storing the second digital asset in the digital location associated with the user.

Embodiment 5: The method of one of Embodiments 1 to 4, further comprising:
receiving, via the graphical user interface, a request to customize the selected lattice structure based on one or more user-selectable parameters; and
updating the selected lattice structure based on the one or more user-selected parameters to create a customized lattice structure, wherein the digitally rendered sole is based on the customized lattice structure.

Embodiment 6: The method of Embodiment 5, wherein the one or more user-selectable parameters comprises at least one of a shape of the selected lattice structure, a color of the selected lattice structure, and user information.

Embodiment 7: The method according to one of Embodiments 1 to 6, further comprising:
storing the digital asset in a digital storage location associated with a user; and
providing, via the graphical user interface, access to any digital assets, including the digital asset, owned by the user.

Embodiment 8: The method according to one of Embodiments 1 to 7, further comprising:
receiving, via the graphical user interface, a request to manufacture the lattice-based footwear article;
determining, based on one or more restriction conditions associated with the digital asset, whether the request is authorized; and
transmitting, responsive to determining that the request is authorized, an authorization to a manufacturing system, wherein the authorization includes the digital asset.

Embodiment 9: A system for generating one or more digital assets representative of a lattice-based footwear article, the system configured to:
receive, via a graphical user interface, a selection of a sole component for the lattice-based footwear article, wherein the selection comprises a selected lattice structure,
and wherein the graphical user interface is configured to display a plurality of lattice structures including the selected lattice structure;
generate, based on the selected lattice structure, a digital version of the lattice-based footwear article including a digitally rendered sole, wherein the digitally rendered sole depicts an additively manufactured mesh component generated based on the selected lattice structure; and
generate a digital asset comprising the digital version of the lattice-based footwear article, wherein the digital version of the lattice-based article is configured to be manipulable via a user input received via the graphical user interface.

Embodiment 10: The system of Embodiment 9, further configured to:
receive, via the graphical user interface, an additional selection of an upper structure for the lattice-based footwear article;
update the digital version of the lattice-based footwear article to include the digitally rendered sole coupled to a digitally rendered upper, wherein the digitally rendered upper depicts the upper structure; and
generate a second digital asset comprising a second digital version of the lattice-based footwear article.

Embodiment 11: The system of Embodiment 9 or 10, wherein the system is further configured to:
store the digital asset in a digital location associated with a user.

Embodiment 12: The system of Embodiment 11, wherein the system is further configured to:
generate a second digital asset representative of the selected lattice structure; and
store the second digital asset in the digital location associated with the user.

Embodiment 13: The system according to one of Embodiments 9 to 12, wherein the system is further configured to:
receive, via the graphical user interface, a request to customize the selected lattice structure based on one or more user-selectable parameters; and
update the selected lattice structure based on the one or more user-selected parameters to create a customized lattice structure, wherein the digitally rendered sole is based on the customized lattice structure.

Embodiment 14: The system of Embodiment 13, wherein the one or more user-selectable parameters comprises at least one of a shape of the selected lattice structure, a color of the selected lattice structure, and user information.

Embodiment 15: A non-transitory computer-readable medium with program code stored thereon, wherein the program code is executable to cause a system to perform operations for generating one or more digital assets representative of a lattice-based footwear article, the operations comprising:
receiving, via a graphical user interface, a selection of a sole component for the lattice-based footwear article, wherein the selection comprises a selected lattice structure,
and wherein the graphical user interface is configured to display a plurality of lattice structures including the selected lattice structure;
generating, based on the selected lattice structure, a digital version of the lattice-based footwear article including a digitally rendered sole, wherein the digitally rendered sole depicts an additively manufactured mesh component generated based on the selected lattice structure; and
generating a digital asset comprising the digital version of the lattice-based footwear article, wherein the digital version of the lattice-based article is configured to be manipulable via a user input received via the graphical user interface.

Embodiment 16: The non-transitory computer-readable medium of Embodiment 15, the operations comprising:
receiving, via the graphical user interface, an additional selection of an upper structure for the lattice-based footwear article;
updating the digital version of the lattice-based footwear article to include the digitally rendered sole coupled to a digitally rendered upper, wherein the digitally rendered upper depicts the upper structure; and
generating a second digital asset comprising a second digital version of the lattice-based footwear article.

Embodiment 17: The non-transitory computer-readable medium of Embodiment 15 or 16, the operations comprising:
storing the digital asset in a digital location associated with a user.

Embodiment 18: The non-transitory computer-readable medium of Embodiment 17, the operations further comprising:
generating a second digital asset representative of the selected lattice structure; and
storing the second digital asset in the digital location associated with the user.

Embodiment 19: The non-transitory computer-readable medium according to one of Embodiments 15 to 18, the operations further comprising:
receiving, via the graphical user interface, a request to customize the selected lattice structure based on one or more user-selectable parameters; and
updating the lattice structure based on the one or more user-selected parameters to create a personalized lattice structure, wherein the digitally rendered sole is based on the customized lattice structure.

Embodiment 20: The non-transitory computer-readable medium of Embodiment 19, wherein the one or more user-selectable parameters comprises at least one of a shape of the selected lattice structure, a color of the selected lattice structure, and user information.

## Claims

1. A method for generating one or more digital assets representative of a lattice-based footwear article, comprising:
receiving, via a graphical user interface, a selection of a sole component for the lattice-based footwear article, wherein the selection comprises a selected lattice structure, and wherein the graphical user interface is configured to display a plurality of lattice structures including the selected lattice structure;
generating, based on the selected lattice structure, a digital version of the lattice-based footwear article including a digitally rendered sole, wherein the digitally rendered sole depicts an additively manufactured mesh component generated based on the selected lattice structure; and generating a digital asset comprising the digital version of the lattice-based footwear article, wherein the digital version of the lattice-based article is configured to be manipulable via a user input received via the graphical user interface.

2. The method of claim 1, further comprising:
receiving, via the graphical user interface, an additional selection of an upper structure for the lattice-based footwear article;
updating the digital version of the lattice-based footwear article to include the digitally rendered sole coupled to a digitally rendered upper, wherein the digitally rendered upper depicts the upper structure; and generating a second digital asset comprising a second digital version of the lattice-based footwear article.

3. The method of claim 1 or 2, further comprising storing the digital asset in a digital location associated with a user;
preferably further comprising storing the second digital asset in the digital location associated with the user.

4. The method according to one of claims 1 to 3, further comprising:
receiving, via the graphical user interface, a request to customize the selected lattice structure based on one or more user-selectable parameters; and
updating the selected lattice structure based on the one or more user-selected parameters to create a customized lattice structure, wherein
the digitally rendered sole is based on the customized lattice structure; preferably wherein the one or more user-selectable parameters comprises at least one of a shape of the selected lattice structure, a color of the selected lattice structure, and user information.

5. The method according to one of claims 1 to 4:
further comprising:
storing the digital asset in a digital storage location associated with a user; and
providing, via the graphical user interface, access to any digital assets, including the digital asset, owned by the user; and/or
further comprising:
receiving, via the graphical user interface, a request to manufacture the lattice-based footwear article;
determining, based on one or more restriction conditions associated with the digital asset, whether the request is authorized; and
transmitting, responsive to determining that the request is authorized, an authorization to a manufacturing system, wherein the authorization includes the digital asset.

6. A system for generating one or more digital assets representative of a lattice-based footwear article, the system configured to:
receive, via a graphical user interface, a selection of a sole component for the lattice-based footwear article, wherein the selection comprises a selected lattice structure, and wherein the graphical user interface is configured to display a plurality of lattice structures including the selected lattice structure;
generate, based on the selected lattice structure, a digital version of the lattice-based footwear article including a digitally rendered sole,
wherein the digitally rendered sole depicts an additively manufactured mesh component generated based on the selected lattice structure; and generate a digital asset comprising the digital version of the lattice-based footwear article, wherein the digital version of the lattice-based article is configured to be manipulable via a user input received via the graphical user interface.

7. The system of claim 6, further configured to:
receive, via the graphical user interface, an additional selection of an upper structure for the lattice-based footwear article;
update the digital version of the lattice-based footwear article to include the digitally rendered sole coupled to a digitally rendered upper, wherein the digitally rendered upper depicts the upper structure; and generate a second digital asset comprising a second digital version of the lattice-based footwear article.

8. The system of claim 6 or 7, wherein the system is further configured to store the digital asset in a digital location associated with a user;
preferably wherein the system is further configured to:
generate a second digital asset representative of the selected lattice structure; and
store the second digital asset in the digital location associated with the user.

9. The system according to one of claims 6 to 8, wherein the system is further configured to:
receive, via the graphical user interface, a request to customize the selected lattice structure based on one or more user-selectable parameters; and
update the selected lattice structure based on the one or more user-selected parameters to create a customized lattice structure, wherein the digitally rendered sole is based on the customized lattice structure;
preferably wherein the one or more user-selectable parameters comprises at least one of a shape of the selected lattice structure, a color of the selected lattice structure, and user information.

10. A non-transitory computer-readable medium with program code stored thereon, wherein the program code is executable to cause a system to perform operations for generating one or more digital assets representative of a lattice-based footwear article, the operations comprising:
receiving, via a graphical user interface, a selection of a sole component for the lattice-based footwear article, wherein the selection comprises a selected lattice structure, and wherein the graphical user interface is configured to display a plurality of lattice structures including the selected lattice structure;
generating, based on the selected lattice structure, a digital version of the lattice-based footwear article including a digitally rendered sole, wherein the digitally rendered sole depicts an additively manufactured mesh component generated based on the selected lattice structure; and generating a digital asset comprising the digital version of the lattice-based footwear article, wherein the digital version of the lattice-based article is configured to be manipulable via a user input received via the graphical user interface.

11. The non-transitory computer-readable medium of claim 10, the operations comprising:
receiving, via the graphical user interface, an additional selection of an upper structure for the lattice-based footwear article;
updating the digital version of the lattice-based footwear article to include the digitally rendered sole coupled to a digitally rendered upper, wherein the digitally rendered upper depicts the upper structure; and generating a second digital asset comprising a second digital version of the lattice-based footwear article.

12. The non-transitory computer-readable medium of claim 10 or 11, the operations comprising:
storing the digital asset in a digital location associated with a user.

13. The non-transitory computer-readable medium of claim 12, the operations further comprising:
generating a second digital asset representative of the selected lattice structure; and
storing the second digital asset in the digital location associated with the user.

14. The non-transitory computer-readable medium according to one of claims 10 to 13, the operations further comprising:
receiving, via the graphical user interface, a request to customize the selected lattice structure based on one or more user-selectable parameters; and
updating the lattice structure based on the one or more user-selected parameters to create a personalized lattice structure, wherein the digitally rendered sole is based on the customized lattice structure.

15. The non-transitory computer-readable medium of claim 14, wherein the one or more user-selectable parameters comprises at least one of a shape of the selected lattice structure, a color of the selected lattice structure, and user information.
